(19) **Europäisches Patentamt** / **European Patent Office** / **Office européen des brevets**

(11) **EP 4 553 245 A1**

(12) **EUROPEAN PATENT APPLICATION**

(43) Date of publication:
14.05.2025 Bulletin 2025/20

(21) Application number: 24212112.7

(22) Date of filing: 11.11.2024

(51) International Patent Classification (IPC):
*E03F 5/04* (2006.01)        *E03F 7/00* (2006.01)
*E03F 5/046* (2006.01)       *G01F 23/28* (2006.01)
*G01F 23/2962* (2022.01)

(52) Cooperative Patent Classification (CPC):
**E03F 7/00; E03F 5/0401; G01F 23/0007;**
**G01F 23/28; G01F 23/296; G01F 23/2962;**
E03F 5/02

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 10.11.2023  NL 2036238

(71) Applicant: Ireckon Water B.V.
5151 AA DRUNEN (NL)

(72) Inventors:
• **Van Roon, Jan Jaap**
  **AMSTERDAM (NL)**
• **Niekerk, Bob Kempes**
  **CULEMBORG (NL)**
• **Van Gorkom, Hendricus Franciscus Marinus**
  **OISTERWIJK (NL)**
• **Theunissen, Jack Elisabeth Marie**
  **NEDERWEERT (NL)**

(74) Representative: **Arnold & Siedsma**
**Bezuidenhoutseweg 57**
**2594 AC The Hague (NL)**

(54) **ULTRASONIC MONITORING OF FILLING LEVELS IN DRAINAGE ELEMENTS**

(57)     A drain sensor assembly (2) for remote monitoring of a filling level of a drainage element when arranged in the drainage element comprises:
- an ultrasound emitter (17) configured and to be arranged to emit an ultrasound signal downwards from an upper region of the drainage element into an interior of the drainage element;
- an ultrasound sensor (16) configured and to be arranged in the upper region of the drainage element to sense a reflected ultrasound signal due to reflection of the ultrasound signal inside the interior of the drainage element;
- a processing module (25) communicatively coupled with the ultrasound emitter and the ultrasound sensor and configured to determine a filling level value indicative of the filling level of the drainage element based on a time interval between emitting of the ultrasound signal by the ultrasound emitter and sensing of the reflected ultrasound signal by the ultrasound sensor; and
- a communication module (26) communicatively coupled with the processing module and configured to communicate the filling level value to a monitoring device remote from the drain sensor assembly.

FIG. 3

EP 4 553 245 A1

**Description**

The present disclosure relates to monitoring of filling levels in drainage elements, in particular ultrasonic monitoring of filling levels in drainage elements.

Drainage elements are known to require periodic maintenance. For example, as stormwater or surface water drains from paved surfaces into drainage elements such as storm water drains or gully pots, contaminants also flow into the interior of the drainage elements. Such contaminants may include sand, debris, litter and other waste. Though some contaminants may be drained with the stormwater, contaminants also remain inside the interior of the drainage element until cleared out during period maintenance. Similar issues arise in other drainage systems such as sewer networks and open water channels or reservoirs.

At present, periodic maintenance is generally scheduled for whole drainage networks or a series of drainage elements at once. This results in some drainage elements being cleared more frequently than strictly required while other drainage elements should have been cleared sooner. Some local authorities charged with maintaining drainage networks even rely on notification by their citizens, who generally only complain once drainage elements are blocked and flooding occurs in their neighborhood. Functioning of drainage infrastructure as well as maintenance effort and costs are thus far from optimal.

An objective of the technology presented herein is to provide improvements in the monitoring of filling levels in drainage elements, in particular by remote monitoring. The inventors desired to ensure that maintenance can be planned more efficiently and even for individual drainage elements. Further, they desired to provide more reliable and/or energy-efficient monitoring means.

The present disclosure provides a drain sensor assembly for remote monitoring of a filling level of a drainage element when arranged in the drainage element. The drain sensor assembly comprises:

- an ultrasound emitter configured and to be arranged to emit an ultrasound signal downwards, preferably from an upper region of the drainage element, into an interior of the drainage element;
- an ultrasound sensor configured and to be arranged in the drainage element, preferably the upper region thereof, to sense a reflected ultrasound signal due to reflection (e.g. upwards reflection) of the ultrasound signal inside the interior of the drainage element;
- a processing module communicatively coupled with the ultrasound emitter and the ultrasound sensor and configured to determine a filling level value indicative of the filling level of the drainage element based on a time interval between emitting of the ultrasound signal by the ultrasound emitter and sensing of the reflected ultrasound signal by the ultrasound sensor; and

- a communication module communicatively coupled with the processing module and configured to communicate the filling level value to a monitoring device remote from the drain sensor assembly.

The filling level of the drainage element relates to an amount of foreign fluid or solid material accumulated in the interior of the drainage element. Such material generally settles due to gravity, but blockages or objects may also affect the filling level. Whatever caused partial or complete filling of the drainage element, the filling level is an important metric to assess proper functioning of drainage elements.

The filling level may be defined as a height with respect to gravity. The ultrasonic signal emitted downwards into the interior of the drainage element reflects on a surface encountered inside the interior of the drainage element. When the drainage element is completely empty, this surface may be formed by the bottom of the drainage element. When foreign material is present inside the interior of the drainage element, said surface may be formed by a top surface of the foreign material. The interior may be (partly) filled with a liquid carrying contamination such as particles which sink and/or floating matter. For example, stormwater may carry sand, litter and leaves into the drainage element. Ultrasound reflects well on a surface formed by various foreign materials, e.g. water, leaves or other debris, and is therefore useful and reliable in measuring the filling level inside drainage elements, even irrespective of the type of matter inside the interior of the drainage element.

Ultrasound is defined as sound with frequencies above 20 kHz. An upper limit of ultrasound frequencies may be defined by 1 GHz. Preferably, the ultrasound signals are emitted in the range of 20kHz to 1 MHz, more preferably above 35 kHz, most preferably $(40 \pm 5)$ kHz.

The time interval $\Delta t$ between emitting of the ultrasound signal by the ultrasound emitter and sensing or receiving of the reflected ultrasound signal by the ultrasound sensor or receiver serves as a parameter for determining the filling level value. For example, the following set of equations may be used:

$$(\text{eq. 1}) \qquad \Delta t = t_s - t_e$$

$$(\text{eq. 3}) \qquad M = v \cdot \Delta t$$

$$(\text{eq. 2}) \qquad F = D - M$$

in which time interval $\Delta t$ is computed as the difference between a time point $t_s$ of sensing the reflected ultrasound signal and a time point $t_e$ of emission of the ultrasound signal. The measured height or distance $M$ is determined based on $\Delta t$ and the speed of sound $v$ (which in general is a function of the medium in which the ultrasound signal travels, including factors such as temperature, humidity and pressure discussed below). The filling level value $F$ is the difference between a depth $D$ of the interior of the drainage element, taken from the ultrasound emitter and/or sensor to a minimum filling level such as a bottom of the interior, and measured distance $M$. The depth D may be determined by a calibration measurement on an empty drainage element, or it may be provided based on known parameters of the drainage element, for example when installing the drain sensor assembly in a particular known type of drainage element or by preprogramming the processing module of the drain sensor assembly.

Note that the above equations assume that the ultrasound emitter and ultrasound sensor are arranged at the same height. However, such arrangement is not strictly necessary and an offset can be employed which can be accounted for, e.g. in measured height $M$. Further, trigonometric factors can be used to take any particular angles into account under which the ultrasound signal is emitted and/or sensed in reflection.

Given the geometry of the measurement and the drainage element, the time interval $\Delta t$ can be used as a metric of the filling level.

The drainage element for which the drain sensor assembly is configured, may be of any type. It may even include surface water features such as open channels, infrastructural ditches or open water reservoirs. However, a sewage drainage element and a stormwater drainage element are preferred applications of the drain sensor assembly. Sewage may be defined urban wastewater and may include liquid and solid excrement. Stormwater may be defined as surface water from precipitation on urban spaces. More in particular, the drain sensor assembly may find advantageous application in a stormwater drainage well, such as a stormwater drain or a gully pot. Such a well has an upright configuration into which a filling level may vary along the vertical (i.e. direction of gravity). When the drainage element is a sewage drainage element, it may also be well-shaped. Example of sewage drainage elements include collection wells, sewer pipes, open or closed channels and tanks such as septic tanks.

In an embodiment, the ultrasound emitter is configured to emit the ultrasound signal in the form of an ultrasound pulse upon receipt of an emission trigger. The emission trigger may be generated by the processing module. The emission trigger may be generated periodically, for example at a particular repetition rate, which may also be determined by the processing module. The repetition rate may be determined based on various parameters discussed below. The pulse may be formed by a particular number of oscillations further described below and/or may be generated at a particular power level also further described below.

In an embodiment, the ultrasound sensor is time-gated to sense ultrasound signals only during a predetermined period after emitting of the ultrasound signal by the ultrasound emitter. Said predetermined period may directly follow the time point of emission of the ultrasound signal, but may also start after a particular time delay. This time-gating functionality can be implemented by the processing module controlling the ultrasound sensor, or there may be a direct communicative coupling between the ultrasound emitter and the ultrasound sensor. The predetermined period and/or any time delay may be set depending on a distance or height range to be covered by the drain sensor assembly.

In an embodiment, the ultrasound emitter and the ultrasound sensor have an at least partially overlapping field of view. Field of view may be defined for the ultrasound emitter as the collection of directions (e.g. emission angles) into which ultrasound signals can be emitted by the ultrasound emitter and, likewise, for the ultrasound sensor as the collection of directions (e.g. sensing angles) from which reflected ultrasound signals can be sensed by the ultrasound sensor.

In an embodiment, the ultrasound emitter and the ultrasound sensor are embodied by an ultrasound sensor module configured to switch between emitting and receiving ultrasound signals. Though ultrasound emitter and sensor may thus be integrated into a single module performing both functions, it is preferred to use a separate ultrasound emitter and sensor to avoid delays inherent in switching between emitting and receiving functionalities in an integrated ultrasound sensor module. Such delays restrict the range (especially towards high filling levels near the ultrasound emitter and/or receiver) which the drain sensor assembly can cover.

The ultrasound emitter and ultrasound sensor can be implemented with technically identical devices, whether these are embodied in a single ultrasound sensor module or provided as separate components. For example, such devices can be set to function as an emitter (e.g. speaker) or as a sensor (e.g. microphone).

In an embodiment, the drain sensor assembly comprises a sensor housing configured to be attached to the interior of the drainage element and accommodating at least one of the ultrasound emitter and the ultrasound sensor, and optionally also accommodating at least one of the processing module and the communication module. It is preferred that the sensor housing accommodates all four of these components so that these can be readily installed (even in retrofit) into the drainage element.

Preferably, the sensor housing comprises an attachment surface for attachment to the interior of the drainage element and a monitoring surface through which the at least one of the ultrasound emitter and the ultrasound sensor have a field of view into the interior of the drainage element for emitting and sensing ultrasound signals, respectively. The attachment surface may be configured for attachment to an upright interior wall of the drainage element, in particular when the drainage element is a well. The attachment surface may thus extend in an upright direction.

Preferably, the at least one of the ultrasound emitter and the ultrasound sensor have a field of view through the monitoring surface under an angle relative to a normal of the monitoring surface in the range of 0° - 45°, preferably 2° - 20°, more preferably 5° - 10°. This angle may further define the downwards direction into which the ultrasound signal is emitted. Further, it has been found that an angle somewhat offset relative to the vertical reduces risk of various measurement errors. For example, when emitting the ultrasound signal parallel to an upright sidewall of a drainage element a (i.e. emission direction is or includes an angle of 0°), reflections off the sidewall introduce inaccuracies.

Preferably, the monitoring surface comprises a first opening through which the ultrasound emitter is exposed and a second opening through which the ultrasound sensor is exposed.

Preferably, the ultrasound emitter and the ultrasound sensor are spaced apart in a direction parallel to the attachment surface, in particular in a direction transverse to the upright direction and optionally also transverse to the ultrasound emission and/or sensing directions. Such spacing entails that the ultrasound emitter and sensor are embodied as separated components. By spacing these apart along the attachment surface, the interior of the drainage element is less obstructed by the drain sensor assembly.

In an embodiment, the drain sensor assembly further comprises a battery module configured to power the drain sensor assembly and provide a power status, in particular in the form of a battery level. With the battery module, the drain sensor assembly does not require an external power source. However, it is also contemplated to power the drain sensor assembly with a connection to an external power source such as a mains circuit, which may for example be available in urban setting from nearby lamp posts.

Preferably, the battery module is communicatively coupled to the communication module and the communication module is further configured to communicate a battery level of the battery module to the monitoring device. The monitoring device may not only receive the filling level value but also the battery level. Alternatively, when the drain sensor assembly is mains-powered, the power status may also be communicated, for example to indicate any malfunction in the mains circuit.

When using ultrasound for determining the filling level, it is preferred to employ low-power ultrasound technology. The ultrasound emitter and sensor preferably operate at a power level of 0.1 W or lower, more preferably 50 mW or lower. Further, the whole drain sensor assembly may be configured to operate at such power level. This power level may be provided by the battery module for retrofit or mobile applications, whereas a fixed power connection may be employed in more permanent situations. Such low power levels are attenable with present low-power ultrasound emitters and ultrasound sensors. Further, processing and communication modules can also be selected accordingly.

Preferably, a current to power the drain sensor assembly (including the ultrasound emitter and ultrasound sensor) is 10 mA or lower, optionally at a nominal voltage in the range of 2 - 5 V, in particular 3.5 V. When a current of 10 mA is used and a voltage of 3.5 V, the power level is 35 mW, which was found to work well for the technologies disclosed herein.

In an embodiment, the communication module is further configured to communicate an identifier of the drain sensor assembly or the drainage element in which the drain sensor is arranged to the monitoring device. The identifier can be communicated separately from the filling level value and/or the battery level, though it is preferred that the communication module communicates the identified together with or when communicating the filling level value and/or the battery level to the monitoring device. Such identifier may define the particular drainage element to which the drain sensor assembly is assigned or it may define the drain sensor assembly itself, which may in turn be assigned to a particular drainage element from time to time.

In an embodiment, the communication module is further configured to collect monitoring commands for the drain sensor assembly from the monitoring device and communicate the monitoring commands to the processing module which in turn controls the ultrasound emitter, and preferably also the ultrasound sensor, based on the monitoring commands.

It is preferable that communication is initiated from the drain sensor assembly for power management, in particular when using the battery module. When communication is initiated by the communication module of the drain sensor assembly, any commands prepared by the monitoring device can be collected/received and processed by the drain sensor assembly. The monitoring device may register that commands are collected and/or received.

In an embodiment, the processing module is configured to determine a repetition rate of emitting of ultrasound signals by the ultrasound emitter based on at least one of:

- battery level of the battery module;
- monitoring commands of the monitoring device;
- one or more than one previously determined filling level value; and
- differences between previously determined filling level values.

For example, when the battery level of the battery module is low, the repetition rate may be reduced or even stopped to maintain a minimum amount of power for communicating with the monitoring device.

As another example, when previously determined filling level values indicate a high filling level, potentially reaching a maximum, the repetition rate may be increased to better asses remaining capacity and urgency of clearing the drainage element.

Alternatively or additionally, it may be determined that no more measurements are to be performed when a maximum filling level is exceeded, preferably for a particular number of previously determined filling level values.

As yet another example, when differences between previously determined filling level values are high, it may be determined to increase the repetition rate to capture more of the variability of the filling level. In contrast, when small differences are detected, the repetition rate may be reduced, optionally temporarily.

In an embodiment, the processing module is further configured to process the reflected ultrasound signal using a band-pass filter for frequencies of the ultrasound signal emitted by the ultrasound emitter. Frequencies deviating from that of the ultrasound signal are then removed from the reflected ultrasound signal. Alternatively or additionally, the processing module may further be configured to process the reflected ultrasound signal using an amplitude threshold filter. Both types of filter serve to improve estimation of the determined filling level.

In an embodiment, the drain sensor assembly further comprises a temperature sensor communicatively coupled to the processing module. The processing module may further be configured to correct for temperature effects on the speed of sound by using a temperature value received from the temperature sensor in determining the filling level value. Temperature affects the speed of sound through the medium (often air) inside the interior of the drainage element. The processing module may compensate for this by applying a correction using the temperature value when determining the filling level value. For example, a look-up table may be stored in a memory of the processing module, which may select an appropriate value for the speed of sound corresponding to the temperature value.

Further, in addition or as alternative to the temperature sensor, a humidity sensor may be comprised by the drain sensor assembly. Such humidity sensor can be communicatively coupled to the processing module and the processing module may further be configured to correct for humidity effects on the speed of sound by using a humidity value received from the humidity sensor in determining the filling level value. Though humidity in the interior of the drain sensor assembly was found to affect the speed of sound in a lesser extent than temperature, for applications in which high precision is desired, a humidity sensor can be contemplated.

Further, in addition or as alternative to the temperature sensor and/or humidity sensor, a pressure sensor may be comprised by the drain sensor assembly. Such pressure sensor can be communicatively coupled to the processing module and the processing module may further be configured to correct for pressure effects on the speed of sound by using a pressure value received from the pressure sensor in determining the filling level value.

In an embodiment, the drain sensor assembly further comprises an undulating exterior surface configured and to be arranged to allow amphibians to pass by the ultrasound emitter and the ultrasound sensor. Amphibians (such as frogs, toads, salamanders and lizards) may additionally or alternative be facilitated to pass out of the (interior of the)drainage element. It was found that amphibians may at times get into drainage elements and thereby interfere with the measurement of the filling level. For example, as an animal attempts to try to get out of the drainage element, it may block the field of view of the sensor module (e.g. the ultrasound emitter and/or ultrasound sensor or any other type of sensor module). By providing the undulating exterior surface in such a way that amphibians are facilitated to pass by the field of view of the sensor module, rather than through said field of view, risk of interference by amphibians or other animals is reduced.

The undulating exterior surface can be part of the sensor housing. Alternatively, the undulating surface can be part of a separate element, such as a fixation part of the drain sensor assembly, which may be coupled or couplable to the sensor housing. For example, the undulating exterior surface may form a surface different from the monitoring surface and the attachment surface of the sensor housing. The undulating exterior surface may be arranged adjacent to each of the monitoring surface and the attachment surface. For example, the undulating exterior surface may form a side surface of the sensor housing, while the monitoring surface forms a bottom surface of the sensor housing and the attachment surface forms a top surface or a side surface of the sensor housing.

More in general, it is foreseen to provide the sensor housing as disclosed herein in combination with such fixation part comprising the undulating exterior, even without the ultrasound emitter and ultrasound sensor. The housing with undulating exterior may form an invention in its own right in which even other types of sensor can be used, i.e. which is not limited to ultrasound emitters or sensors. Examples of such other types of sensor modules are discussed below in relation to the monitoring system but equally apply here.

In particular, the following embodiments (a) - (n) are foreseen for a drain sensor housing assembly, each of which may also include the features of the drain sensor assembly as disclosed herein. However, the presence of a sensor module with the drain sensor housing assembly is not required, as any sensor module may be installed in retrofit into the sensor housing (e.g. according to any embodiment disclosed herein). Further, the sensor housing may be according to any embodiment as disclosed herein.

(a) A drain sensor housing assembly configured to be arranged in an interior of a drainage element for housing a sensor module that is configured to monitor a filling level of the interior of the drainage element when arranged in the drainage element, the drain sensor housing assembly comprising:

- a sensor housing configured to house the sensor module and comprising a monitoring surface through which the sensor module can sense a parameter indicative of the filling level in the interior of the drainage element; and
- an undulating exterior surface configured and arranged to allow amphibians to pass by the monitoring surface of the sensor housing, and optionally out of the drainage element when the drain sensor housing assembly is arranged therein.

(b) The drain sensor housing assembly according to embodiment (a), comprising a fixation part coupled or couplable to the sensor housing, wherein the fixation part comprises the undulating exterior surface.

(c) The drain sensor housing assembly according to embodiment (b), wherein the fixation part is coupled or couplable to a surface of the housing different from the monitoring surface, such as an attachment surface for abutting or attachment of the sensor housing to the interior of the drainage element.

(d) The drain sensor housing assembly according to embodiment (a), wherein:

- the undulating exterior surface forms a side surface of the sensor housing; and
- the monitoring surface forms the bottom surface of the sensor housing.

(e) The drain sensor housing assembly according to embodiment (d), wherein the sensor housing further comprises an attachment surface for abutting or attachment of the sensor housing to the interior of the drainage element, wherein the attachment surface preferably forms a top surface or a further side surface of the sensor housing.

(f) The drain sensor housing assembly according to any of the embodiments (a) - (e), wherein a field of view for the sensor module through the monitoring surface is offset from the undulating exterior surface.

(g) The drain sensor housing assembly according to any of the embodiments (a) - (f), wherein the undulating exterior surface is elongate in an longitudinal direction, preferably transverse to an undulation direction.

(h) The drain sensor housing assembly according to embodiments (f) and (g), wherein the field of view is offset with respect to the longitudinal direction.

(i) The drain sensor housing assembly according to embodiment (g) or (h), wherein the longitudinal direction of the undulating exterior surface extends at an offset relative to the monitoring surface of the sensor housing, wherein said offset of preferably transverse to the field of view of the sensor module through the monitoring surface.

(j) The drain sensor housing assembly according to any of the embodiments (a) - (i), wherein the undulating exterior surface comprises alternating protrusions and recesses. The recesses may form through-holes.

(k) The drain sensor housing assembly according to embodiment (j), wherein the alternating protrusions and recesses are stepped with edges. This serves to provide additional grip for the amphibians.

(l) The drain sensor housing assembly according to any of the embodiments (a) - (k), wherein the undulating surface has at least one of:

- an undulation pitch in the range of 1 mm - 5 cm, preferably 5 mm - 2 cm; and
- an undulation depth in the range of 1 mm - 1 cm.

These dimensions greatly facilitate amphibian movement and may be selected to favor particular species, such as frogs, toads, salamanders and/or lizards. The undulation pitch may be measured a direction transverse to the undulations, for example from a particular location on a protrusion of the undulation to a subsequent protrusion. The undulation depth may be measured between a protrusion and a recess of the undulating exterior surface. The undulation pitch and/or depth may be constant over the undulating exterior surface, but may also vary, preferably within the ranges given here.

(m) The drain sensor housing assembly according to any of the embodiments (a) - (l), wherein the undulating exterior surface is bent in a direction transverse to its longitudinal direction to form a corner with two internal sides onto which amphibians can find grip, e.g. for their left and right limbs. Such a corner-shaped undulating exterior surface may be arranged or arrangeable in a corner formed by two walls (e.g. upright walls or sidewalls) of the interior of the drainage element. The two internal sides or faces may be connected at right angles to match a square interior corner of the interior of a drainage element, though other angles are also possible.

(n) The drain sensor housing assembly according to any of the embodiments (a) - (m), wherein the sensor module, such as the ultrasound emitter and/or the ultrasound sensor, and optionally also at least one of the processing module, the communication module and the battery module, each as disclosed herein, is/are arranged inside the sensor housing.

The present disclosure further provides a drainage element comprising:

- a drainage housing defining an interior for collecting and discharging fluids such as stormwater; and
- a drain sensor assembly according to the present disclosure arranged to monitor a filling level inside the interior of the drainage element.

The drainage housing may comprise an inlet opening for receiving fluids and a discharge opening for discharging fluids. The inlet opening is arranged above the discharge opening so that the fluids can flow from the inlet opening to the discharge opening under the influence of gravity.

Preferably, the drain sensor assembly is arranged in an upper region of the drainage element. The upper region of the drainage element may be distinct from a lower region of the drainage element. A separation between upper and lower regions may be defined by an upper end of a discharge opening of the drainage element.

The drainage element may be a stormwater drainage element, in particular a stormwater drainage well such as a stormwater drain or a gully pot. Alternatively, the drainage element may be a sewage drainage element. Whatever embodiment is chosen, the drainage housing may be made with concrete.

In an embodiment, the drainage housing has a bottom surface delimiting the interior in a downwards direction. Preferably, the ultrasound emitter of the drain sensor assembly is arranged to emit the ultrasound signal towards the bottom surface. Further preferably, the ultrasound sensor is configured and arranged to sense a reflection of the ultrasound signal emitted towards the bottom surface. The ultrasound signal may reflect from the bottom or any intervening surface, such as a top surface of a fluid or a foreign object inside the drainage element.

When the drainage housing comprises both the bottom and the discharge opening, it is preferred that the discharge opening is arranged at a vertical offset relative to the bottom. The vertical offset may define a settling reservoir for sedimentation of relatively dense material, such as sand or debris in surface water, between a lower end of the discharge opening and the bottom of the drainage housing.

In an embodiment, the drainage housing further comprises one or more than one sidewall extending in an upright direction. Preferably, the drain sensor assembly or at least its sensor housing is arranged on or in at least one of the one or more than one sidewall. For example, the drain sensor assembly may be recessed into such sidewall. Such configurations leave free the interior of the drainage element to maximize filling capacity.

More preferably, the drain sensor assembly is arranged at a corner defined by two sidewalls of the one or more than one sidewall. For example, the drain sensor assembly or at least its sensor housing may be arranged in the corner or eccentrically towards the corner, i.e. nearest to one corner in particular compared to any other corners, as seen in a cross-section of the drainage element at the level of the drain sensor assembly or its housing. A further advantage of positioning the drain sensor assembly in the corner is encountered with wells, such as stormwater drains or gully pots, which are often cleared by introducing a suction pipe into the well. Obstruction of such a suction pipe (which generally is of a round cross-section) is minimized when the drainage sensor assembly is arranged in or near the corner of the well (which generally is of a rectangular or square cross-section).

In an embodiment, the drainage element further comprises a cover delimiting the interior in an upwards direction. Preferably, the drain sensor assembly is arranged on or in the cover. Such configuration has various advantages, including that the interior of the drainage element is left free to maximize filling capacity and an enlarged filling level range can be covered by the drain sensor assembly.

When the cover is an openable cover or a removable cover, the drain sensor assembly is moved out of the way with such a cover when access is needed into the interior of the drainage element. The cover may also be both openable as well as removable. The cover may be made with metal such as iron e.g. by casting.

In an embodiment, at least one of the ultrasound emitter and the ultrasound sensor is arranged such that the ultrasound signal is emitted and sensed, respectively, in an emission or sensing direction at an angle relative to the vertical in the range of 0° - 45°, preferably 2° - 20°, more preferably 5° - 10°. The ultrasound emitter may thus have an emission direction in said angular range while the ultrasound sensor may have a sensing direction in said angular range, which may overlap but need not be identical.

In an embodiment, the drain sensor assembly comprises the undulating exterior surface configured and arranged to allow amphibians to pass by the ultrasound emitter and the ultrasound sensor of the drain sensor assembly. Amphibians may then be facilitated to move out of the drainage element, while not obstructing the ultrasound emitter or the ultrasound sensor (or any other sensor module which may be contemplated). The undulating exterior surface comprises alternating protrusions and recesses, which are preferably stepped to provide edges for additional grip.

Preferably, the undulating exterior surface is elongate. Further preferably, the undulating surface is also bent in a direction transverse to its longitudinal direction to form a corner with two sides onto which amphibians can find grip, e.g. for their left and right limbs. Such a corner-shaped undulating exterior surface may be arranged or arrangeable in a corner formed by two walls (e.g. upright walls or sidewalls) of the interior of the drainage element. Alternatively or additionally, the undulating surface has an undulation pitch in the range of 1 mm - 5 cm, preferably 5 mm - 2 cm. A undulation depth may be in the range of 1 mm - 1 cm. These aspects greatly facilitate amphibian movement. The features of the undulation exterior surface in the context of the drainage element can be the same as any feature described herein in relation to the drain sensor assembly or the drain sensor housing assembly.

The drainage element may be of any type discussed herein, such as a sewage or stormwater drainage element, in particular well-shaped.

The present disclosure further provides a monitoring system for remote monitoring of filling levels of drainage elements in a drainage network. The monitoring system comprises:

- at least one drain sensor assembly according to the present disclosure or drainage element according to the present disclosure; and
- a monitoring device communicatively coupled or couplable with the communication module of each of the at least one drain sensor assembly or drainage element and configured to receive filling level values therefrom.

The monitoring device can be embodied in various ways. For example as a fixed remote station, such as a server or computer, or as a mobile station, such as mobile terminal communicating with a cloud-based service. The mobile station could carried by inspection personnel or be arranged in an inspection vehicle.

In an embodiment, the communication module of the drain sensor assembly is configured to initiate communication with the monitoring device. In this case, it is preferred that the monitoring device is configured to await initiation of communication by the communication module, rather than push communication towards the communication module. Such configuration may serve to optimize power consumption by the drain sensor assembly.

In an embodiment, the monitoring device is configured to provide monitoring commands for collection by the communication module. Preferably, the monitoring device is configured to register whether the monitoring commands are collected.

The monitoring commands may include a preset monitoring repetition rate which is modifiable by the drain sensor assembly based in at least one of:

- a battery level of a battery module comprised by the drain sensor assembly;
- one or more than one previously determined filling level value of the drain element; and
- differences between previously determined filling level values of the drain element.

Alternatively or additionally, it is envisaged that the monitoring device itself determines the preset monitoring repetition rate based on any of the above parameters, while the drain sensor assembly is preferably prevented from (or not capable of) modifying the preset monitoring repetition rate, or configured to only modify the preset monitoring repetition rate between a minimum repetition rate and a maximum repetition rate. This minimum and/or maximum repetition rate may also be determined by the monitoring device, e.g. based on any of the above parameters.

In an embodiment, the monitoring device is configured to output maintenance data based on communication received from the communication modules. The maintenance data preferably includes at least one of:

- a cleaning instruction for specific drainage elements of the drainage network for which the filling level value exceeds a predetermined maximum filling level over a predetermined period of time;
- a review instruction for specific drainage elements of the drainage network for which the filling level value is below a predetermined minimum filling level, preferably over a predetermined period of time;
- a battery change instruction for specific drain sensor assemblies of the monitoring system for which a battery level is below a predetermined minimum battery level; and
- an inspection instruction for specific drain sensor assemblies of the monitoring system from which no communication has been initiated over a predetermined period of time.

Each of the above instructions may be associated with an identifier of the drain sensor assembly and/or drainage element concerned. The instructions can be output in the form of a table, graphically in an overview or map of the drainage network, in an audible form or by any other means. The monitoring device may comprise a display for this purpose or may transmit the monitoring data to a further device (e.g. mobile terminal) for outputting or displaying the monitoring data and its instructions on the further device.

Using this maintenance data, maintenance staff may schedule maintenance tasks efficiently for those drainage elements or drain sensor assembly which require it or are about to require it. The drainage network may then be maintained in an economically efficient way.

A filling level value which exceeds a predetermined maximum filling level over a predetermined period of time may indicate that the drainage element concerned does not drain appropriately and has to be cleaned or cleared out. A cleaning instruction can be output to indicate this for such drainage element.

A filling level value which is below a predetermined minimum filling level over a predetermined period of time may indicate that the drainage element concerned is leaking. A review instruction can be output for such drainage element.

More in general, the predetermined minimum and/or maximum filling levels may be dynamically determined based on filling level values of one or more than one other drainage element of the same drainage network. Any deviating or "odd" behavior may then be determined in relation to neighboring drainage element. For example, filling levels of a leaking drainage element will be lower than those of intact nearby drainage elements which would be expected to receive the same influx of fluids. Similarly, a blocked drainage element (or a drainage element connected to a black discharge channel) will exhibit higher filling level values.

Though it is preferred that the monitoring system has at least one drain sensor assembly that is configured to use ultrasound to determine filling level values (i.e. by means of the ultrasound emitter and the ultrasound receiver), different sensor assemblies may be employed, for example based on a floater, on infrared signals, on camera vision or measurement of electric conductivity inside the drainage element. It is noted that the functionality of the monitoring device does not depend on the specific ways in which the filling level values are obtained. Other features of the monitoring system can be the same as those of the monitoring system with the ultrasound emitter and ultrasound sensor. For example, a repetition rate may also be determined for sensors of a different type.

The monitoring system for remote monitoring of filling levels of drainage elements in a drainage network thus at least comprises a drain sensor assembly and the monitoring device. The drain sensor assembly may be arranged with or in a drainage element as disclosed herein. The drain sensor assembly comprises:

- a sensor module configured and to be arranged to sense a sensor parameter indicative of the filling level inside the interior of the drainage element;
- a processing module communicatively coupled with the sensor module and configured to determine a filling level value indicative of the filling level of the drainage element based on the sensor parameter; and
- a communication module communicatively coupled with the processing module and configured to communicate the filling level value to a monitoring device remote from the drain sensor assembly. The monitoring device is communicatively coupled or couplable with the communication module of the at least one drain sensor assembly and is configured to receive filling level values from this at least one drain sensor assembly.

Though the ultrasound sensor module is preferred for the sensor module of the monitoring system, other types of sensor modules are foreseen, such as:

- a floater sensor configured and to be arranged to float on a top surface of liquid inside the interior of the drainage element to gauge the filling level;
- an infrared sensor module including an infrared emitted and an infrared sensor, which may each be configured and to be arrange like the ultrasound emitter and ultrasound sensor, respectively;
- a vision sensor module including a camera configured and to be arrange to image at least part of the interior of the drainage element, e.g. downwards to the bottom of the interior; and/or
- an electric conductivity sensor configured and to be arranged to sense electrical conductivity of material adjacent to a sensing surface.

The present disclosure further provides a method for remote monitoring of a filling level of a drainage element. The method comprises:

- emitting an ultrasound signal downwards into an interior of the drainage element;
- sensing a reflected ultrasound signal due to reflection of the ultrasound signal inside the interior of the drainage element;
- determining a filling level value indicative of the filling level of the drainage element based on a time interval between emitting the ultrasound signal and sensing the reflected ultrasound signal; and
- communicating the filing level value to a monitoring device remote from the drainage element.

In an embodiment, emitting the ultrasound signal comprises emitting an ultrasound pulse upon receipt of an emission trigger. The duration of the pulse is selected to include sufficient ultrasonic oscillations, for example from 3 to 100, preferably from 5 to 50, for example $10 \pm 5$ oscillations. The number of oscillations can be selected independently from the ultrasound frequencies being used. At a frequency of 40 kHz, a pulse of 10 oscillations has a pulse duration of 0.25 ms, which was found to work well in the technologies presented here. Short pulse durations as the above were also found to reduce interfering echoes arising in the interior of the drainage element.

In an embodiment, sensing the reflected ultrasound signal comprises time-gating to only sense ultrasound signals during a predetermined period after emitting the ultrasound signal.

In an embodiment, sensing the reflected ultrasound signal comprises sensing with a field of view which at least partially overlaps a field of view used in emitting the ultrasound signal.

In an embodiment, emitting the ultrasound signal comprises emitting in an emission direction at an angle relative to vertical in the range of 0° - 45°, preferably 2° - 20°, more preferably 5° - 10°.

In an embodiment, sensing the reflected ultrasound signal comprises sensing in a sensing direction at an angle relative to vertical in the range of 0° - 45, preferably 2° - 20°, more preferably 5° - 10°. The emission direction and the sensing direction may overlap partially or fully.

In an embodiment, the method comprises powering with a battery at least one, preferably all, of emitting the ultrasound signal, sensing the reflected ultrasound signal, determining the filling level value and communicating the filing level value. The method may further comprise communicating a battery level of the battery to the monitoring device, preferably as part of communicating the filing level value.

In an embodiment, the method comprises communicating an identifier of the drainage element the monitoring device, preferably when communicating the filling level value and/or the battery level to the monitoring device.

In an embodiment, the method further comprises:

- collecting monitoring commands from the monitoring unit; and
- controlling emitting the ultrasound signal, preferably also sensing the reflected ultrasound signal, based on the monitoring commands.

In an embodiment, the method further comprises determining a repetition rate of emitting of ultrasound signals based on at least one of:

- battery level of the battery;
- monitoring commands of the monitoring module;
- one or more than one previously determined filling level value; and
- differences between previously determined filling level values.

In an embodiment, determining the filling level value comprises at least one of:

- processing the reflected ultrasound signal using a band-pass filter for frequencies of the emitted ultrasound signal;
- processing the reflected ultrasound signal using an amplitude threshold filter on the reflected ultrasound signal; and
- correcting for temperature effects on the speed of sound using a temperature value obtained from the interior of the drainage element.

The method disclosed herein may involve employing the drain sensor assembly, the drainage element and/or the monitoring system as disclosed herein. Likewise, the drain sensor assembly, the drainage element and/or the monitoring system as disclosed herein may each be configured to perform the method as disclosed herein.

Finally, the present disclosure further provides use of ultrasound for monitoring of a filling level in a drainage element, a surface water drainage well or a storm water drain. Preferably, said use involves remote monitoring of the filling level.

In summary, the present technology thus provides ultrasonic monitoring of filling levels in drainage elements by way of advantageous devices, systems and methods.

Aspects of the present technology are illustrated in the appended figures, in which:

- FIG. 1 shows an exterior perspective view of a drainage element equipped with a drain sensor assembly;
- FIG. 2 shows an interior perspective and partially cutaway view of the drainage element of FIG. 1;
- FIG. 3 shows a longitudinal cross-section of the drainage element of FIG. 1;
- FIG. 4 shows a perspective view of the drain sensor assembly used in the drainage element of FIG. 1;
- FIG. 5 shows another perspective view of the drain sensor assembly of FIG. 4;
- FIG. 6 shows a partially cut-away frontal view of a drainage element equipped with a drain sensor assembly having separate emitter and receiver;
- FIG. 7 shows a cross-sectional side view of a drainage element equipped with a drain sensor assembly integrated or recessed into a sidewall of the drainage element;
- FIG. 8 shows a cross-sectional side view of a drainage element equipped with a drain sensor assembly arrange on a cover of the drainage element;
- FIG. 9 shows a schematic overview of modules of a drain sensor assembly; and
- FIG. 10 shows a drainage network equipped with a monitoring system.

The following reference signs are used throughout.

1   drainage element
2   drain sensor assembly
3   stormwater drain
4   curbside
5   road
6   sidewalk
7   cover
8   inlet opening
9   discharge opening
10   discharge channel
11   sidewall
12   bottom
13   filling level
14   sediment
15   liquid
16   (ultrasound) signal
17   (ultrasound) emitter
18   reflected (ultrasound) signal
19   (ultrasound) sensor
20   sensor housing
21   undulating exterior surface
22   monitoring surface
23   attachment surface
24   fixation part
25   processing module
26   communication module
27   battery module

28    first opening
29    second opening
30    drain sensor housing assembly
31    sensor module
32    protrusion
33    recess
34    edge
35    internal side or face
36    monitoring device
37    further sensor module
38    monitoring system
39    drainage well
40    drainage network
41    sewer pipe
42    infiltration reservoir
43    output device

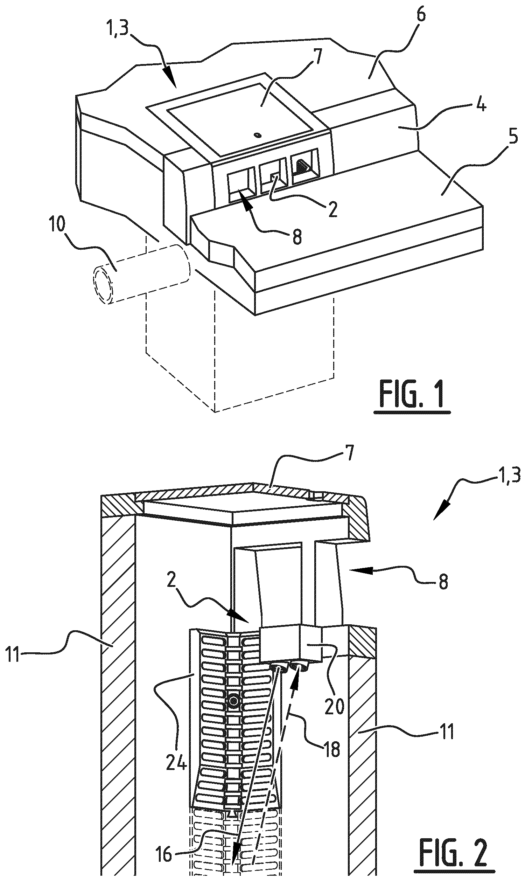

FIG. 1 - 3 show a drainage element 1 equipped with a drain sensor assembly 2. Here, the drainage element 1 is in the form of a stormwater drain 3 positioned at a curbside 4 arranged between two paved surfaces in the form of a road 5 and a sidewalk 6. The stormwater drain 3 has a cover 7 which is openable, an inlet opening 8 and a discharge opening 9. The inlet opening 8 is arranged in an upper region and the discharge opening 9 in a lower region of the drainage element 1. The discharge opening 9 is connected to a discharge channel 10, here shown as a pipe. The drainage element 1 further comprises sidewalls 11 and a bottom 12. In this example, the sidewalls 11 are at rights angles and define a rectangular or square horizontal cross-section of the drainage element 1. The drainage element 1 in the form of a stormwater drain 3 (or more generally as a drainage well) extends in an upright direction which, when installed, is generally to be aligned with the vertical.

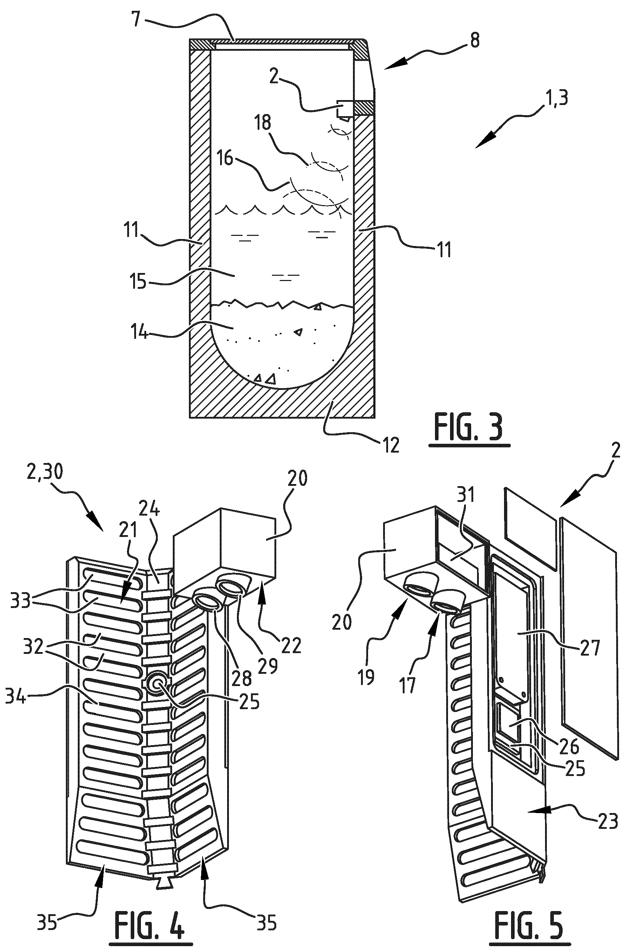

The interior perspective of FIG. 2 in particular illustrates the drain sensor assembly 2 and how it can be arranged in the interior of the drainage element 1. The drain sensor assembly 2 is arranged in an interior corner between two adjacent sidewalls 11 of the drainage element 1. A different corner inside the drainage element 1 can be selected. Further details of the drain sensor assembly 2 are described in relation to FIG. 4 and 5 below.

The longitudinal cross-section of FIG. 3 shows how the drainage element 1 can measure a filling level 13 of the drainage element 1, in particular a filling level 13 of any material inside the interior of the drainage element 1. Here, stormwater drain 3 is illustrated with sediment 14 on its bottom 12 with a liquid 15 above the sediment 14. An ultrasound signal 16 emitted by the drain sensor assembly 2, in particular its ultrasound emitter 17, is reflected by a top surface of the liquid 15 inside the drainage element 1. The reflected ultrasound signal 18 is sensed by the drain sensor assembly 2, in particular its ultrasound sensor 19, with which a filling level value is determined as described previously.

FIG. 4 and 5 show perspective views of the drain sensor assembly 2 that is also used in the drainage element 1 / stormwater drain 3 of FIG. 1 - 3. Its exterior components include a sensor housing 20 which is configured to accommodate the internal components of the drain sensor assembly 2 and an optional undulating exterior surface 21. In this example, the undulating exterior surface 21 is comprised by a fixation part 24 that is coupled to the sensor housing 20. The various configurations of these external and internal components are already described above in detail and only addressed briefly here in relation to the illustrated embodiments.

The sensor housing 20 is configured to be attached to the interior of the drainage element 1, in particular by means of the fixation part 24 which for this purpose comprises a through hole 25. A crew or the like can be inserted through said through hole 25 to couple the drain sensor assembly 2 with (a sidewall 11 or corner of) the drainage element 1 (e.g. as shown in FIG. 2).

The sensor housing 20 comprises an attachment surface 23 for attachment or abutment to the interior of the drainage element 1, preferably an upright interior wall (e.g. a sidewall 11) thereof, and a monitoring surface 22 through which the ultrasound emitter 17 and the ultrasound sensor 19 have a field of view into the interior of the drainage element 1 for emitting ultrasound signals 16 and sensing reflected ultrasound signals 18, respectively. As may also be understood from FIG. 2, the undulating exterior surface 21 and/or the fixation part 24 facilitate amphibians in bypassing and thus clearing this field of view. This reduces the risk of measurement error due to such animals residing inside the drainage element 1 from time to time.

In the illustrated embodiment, the internal components accommodated by the sensor housing 20 of the drain sensor assembly 2 comprise the ultrasound emitter 17 and the ultrasound sensor 19, a processing module 25 and a communication module 26. Further, a battery module 27 is provided to power these components. Internal components are accessible by removing cover sections of the sensor housing 2 and/or fixation part 24 (e.g. as illustrated in FIG. 5). The fixation part 24 may also accommodate internal components and may be comprised by the sensor housing 2.

The ultrasound emitter 17 and the ultrasound sensor 19 are spaced apart in a direction parallel to the attachment surface 23 of the sensor housing 20. The monitoring surface 22 comprises a first opening 28 through which the ultrasound emitter 17 is exposed and a second opening 29 through which the ultrasound sensor 19 is exposed.

The exterior components of FIG. 4-5 also illustrate a drain sensor housing assembly 30 in which no internal components need be present, since these can be installed in retrofit as desired. The drain sensor housing assembly 30 is configured to be arranged in an interior of a drainage element 1 for housing a sensor module 31 that is configured to monitor a filling level of the interior of the drainage element 1 when arranged in the drainage element. The drain sensor housing assembly 30 comprises the sensor housing 20 which is configured to house the sensor module 31 and comprising the monitoring surface 21 through which the sensor module 31 can sense a parameter indicative of the filling level in the interior of the drainage element 1. Further and optionally, the drain sensor housing assembly 30 comprises the undulating exterior surface 21 configured and arranged to allow amphibians to pass by the monitoring surface 22 of the sensor housing 20. The undulating exterior surface 21 comprises alternating protrusions 32 and recesses 33. The alternating protrusions 32 and recesses 33 are stepped with edges 34, though these may also smoothly transition from one another.

In the illustrated embodiment, the undulating exterior surface 21 is shaped so that it can be arranged in a corner formed by two walls (e.g. upright walls or sidewalls 11) of the interior of the drainage element 1. The fixation part 24 with its undulating exterior surface 21 is bent in a direction transverse to its longitudinal direction to comply to such corner shape with two adjacent internal sides or faces 35 onto which amphibians can find grip, e.g. for their left and right limbs. The protrusions 32 and recesses 33 are arranged in these internal sides 35.

The undulating exterior surface 21 is elongate in a longitudinal direction which is transverse to an undulation direction. The field of view for the sensor module 31 through the monitoring surface 22 is offset from the undulating exterior surface 21 and/or with respect to the longitudinal direction in which the undulating exterior surface 21 is elongated (e.g. as illustrated in FIG. 2).

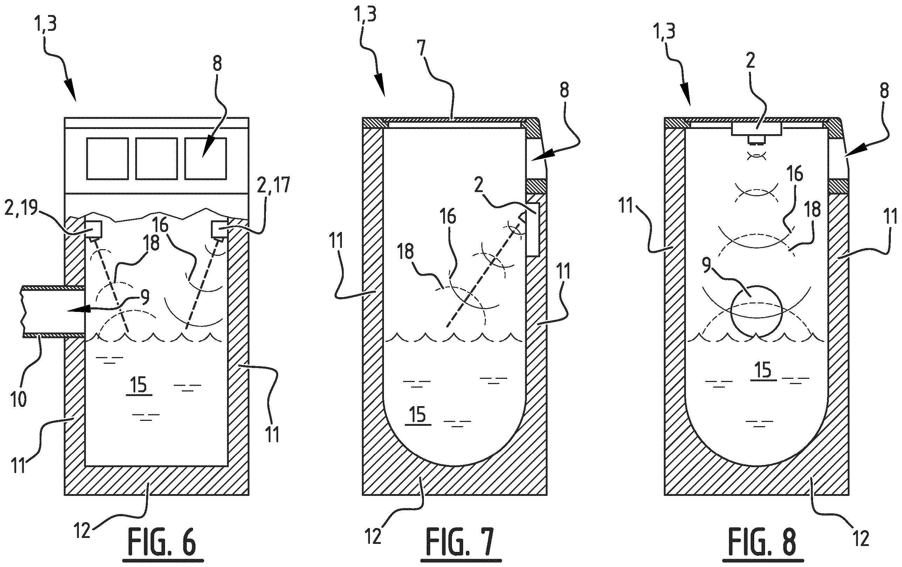

FIG. 6-8 show variations of how a drain sensor assembly 2 can be arranged inside a drainage element 1, in particular in the form of a stormwater drain 3.

In FIG. 6, the drainage element 1 is equipped with a drain sensor assembly 2 having separate emitter 17 and sensor 19. Though it is preferred that the emitter 17 is an ultrasound emitter and the sensor 19 is an ultrasound sensor, other types of signals can be used, e.g. as described above. As illustrated, the field of view of emitter 17 and sensor 19 partially overlaps. The emission direction and the sensing direction (dashed lines) are both set at an angle relative to the vertical, which here coincides with the upright direction of the sidewalls 11 of the drainage element 1.

In FIG. 7, a drainage element 1 is equipped with a drain sensor assembly 2 that is integrated or recessed into a sidewall 11 of the drainage element 1. The emitter 17 and sensor 19 may be readily integrated into a sensor module 31 here, in which case the field of view fully overlaps. As illustrated, the signals 16, 18 are emitted and sensed under the same angle relative to the vertical.

In FIG. 8, a drainage element 1 is equipped with a drain sensor assembly 2 that is arranged on an interior surface of the cover 7 of the drainage element 1. Here, the signals 16, 18 are emitted and sensed along the vertical. Further, the discharge opening 9 is visible, which delimits the upper region (up to the cover 7) and the lower region (down to the bottom 12) of the drainage element 1.

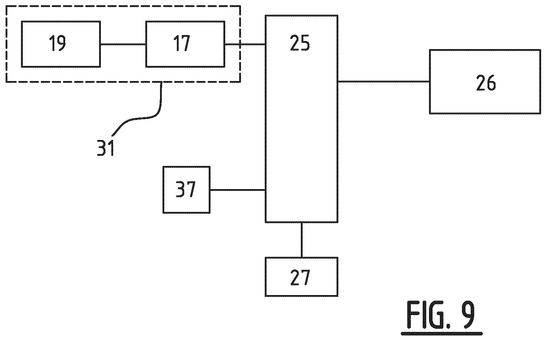

FIG. 9 shows a schematic overview of modules of a drain sensor assembly 2. The drain sensor assembly 2 here comprises the following internal components which are already explained in detail above:

- the sensor module 31 configured to sense a sensor parameter indicative of the filling level inside the interior of the drainage element 1, here in the form of a separate emitter 17 (e.g. the ultrasound emitter) and sensor 19 (e.g. the ultrasound sensor) while various other implementations of the sensor module 31 have also been discussed above;
- the processing module 25 which is communicatively coupled to the sensor module 31 and/or at least one of the emitter 17 and the sensor 19, and which is configured to determine the filling level value based on the sensed parameter provided by the sensor module 31 ;
- the communication module 26 communicatively coupled with the processing module 25 and configured to communicate the filling level value to a monitoring device 36 remote from the drain sensor assembly 1;
- an optional further sensor module 37 communicatively coupled to the processing module 25 and comprising one or more than one further sensor such as a temperature sensor, a humidity sensor and/or a pressure sensor; and
- the battery module 27 configured to power at least eh sensor module 31, the processing module 25, the communication module 26 and any further sensor module 37 of the drain sensor assembly 1.

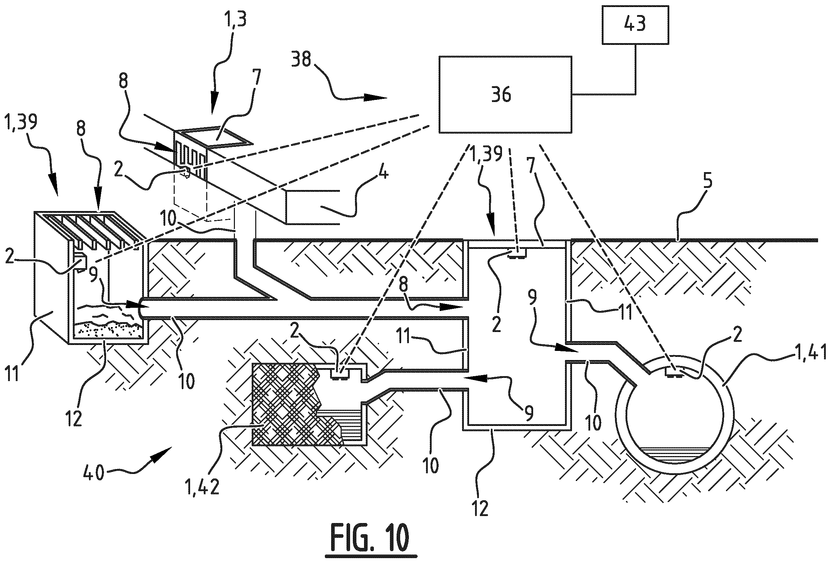

FIG. 10 shows a drainage network 40 (here an underground drainage network such as may be employed for sewage and/or stormwater) equipped with a monitoring system 38 which comprises a monitoring device 36 and multiple drain sensor assemblies 2 (which may each be according to any embodiment disclosed herein and need not be the same). The drain sensor assemblies 2 are mounted to various drainage elements 1 of the drainage network 40, such as a stormwater drain 3, a drainage well 39 with an inlet opening 8 at its top (left in het figure) or with a cover 7 (central in the figure), a sewer pipe 41 and an infiltration reservoir 42. The drainage elements 1 are fluidly connected via their inlet or discharge openings 8, 9 and discharge channels 10. This further illustrates the versatility of the drain sensor assembly 2.

The monitoring system 38 allows remote monitoring of filling levels of the drainage elements 1 in the drainage network 40. The monitoring device 36 is communicatively coupled or couplable with the communication modules 29 of the drain sensor assemblies 2 (e.g. wireless) and is configured to receive filling level values therefrom. Preferably, the communication modules 29 are configured to initiate communication with the monitoring device 36, which in turn is configured to await initiation of communication by the various communication modules 36. The monitoring device 36 may in particular be configured to provide monitoring commands for collection by the communication modules 29 and register if and when the monitoring commands are collected.

Though it is preferred that the monitoring system 38 has at least one drain sensor assembly 2 that is configured to use ultrasound to determine filling level values (i.e. by means of the ultrasound emitter 17 and the ultrasound sensor 19), different sensor modules 31 may be employed, for example based on a floater, on infrared signals, on camera vision or measurement of electric conductivity inside the drainage element. The functionality of the monitoring system 38 does not depend on the specific way in which filling levels are measured.

The monitoring device 36 may output maintenance data via an output device 43, such as a display or mobile terminal. Reference is made to the detailed description above for the various functions of the monitoring system 38 and its monitoring device 36.

## Claims

1. A drain sensor assembly for remote monitoring of a filling level of a drainage element when arranged in the drainage element, the drainage element preferably being a sewage or stormwater drainage element in particular a sewage or stormwater drainage well such as a stormwater drain or a gully pot, the drain sensor assembly comprising:

   - an ultrasound emitter configured and to be arranged to emit an ultrasound signal downwards from an upper region of the drainage element into an interior of the drainage element;
   - an ultrasound sensor configured and to be arranged in the upper region of the drainage element to sense a reflected ultrasound signal due to reflection of the ultrasound signal inside the interior of the drainage element;
   - a processing module communicatively coupled with the ultrasound emitter and the ultrasound sensor and configured to determine a filling level value indicative of the filling level of the drainage element based on a time interval between emitting of the ultrasound signal by the ultrasound emitter and sensing of the reflected ultrasound signal by the ultrasound sensor; and
   - a communication module communicatively coupled with the processing module and configured to communicate the filling level value to a monitoring device remote from the drain sensor assembly.

2. The drain sensor assembly according to claim 1, wherein at least one of:

   - the ultrasound emitter is configured to emit the ultrasound signal in the form of an ultrasound pulse upon receipt of an emission trigger, preferably generated by the processing module, wherein the ultrasound pulse is preferably formed of from 3 to 100 ultrasound oscillations;
   - the ultrasound sensor is time-gated to sense ultrasound signals only during a predetermined period after emitting of the ultrasound signal by the ultrasound emitter;
   - the ultrasound emitter and the ultrasound sensor have an at least partially overlapping field of view; and
   - the ultrasound emitter and the ultrasound sensor are embodied by an ultrasound sensor module configured to switch between emitting and receiving ultrasound signals.

3. The drain sensor assembly according to claim 1 or 2, further comprising a sensor housing configured to be attached to the interior of the drainage element and accommodating at least one of the ultrasound emitter and the ultrasound sensor, and optionally also accommodating at least one of the processing module and the communication module, wherein the sensor housing comprises an attachment surface for attachment to the interior of the drainage element, preferably an upright interior wall thereof, and a monitoring surface through which the at least one of the ultrasound emitter and the ultrasound sensor have a field of view into the interior of the drainage element for emitting and sensing ultrasound signals, respectively, and optionally wherein at least one of:

   - the at least one of the ultrasound emitter and the ultrasound sensor have a field of view through the monitoring surface under an angle relative to a normal of the monitoring surface in the range of 0° - 45°, preferably 2° - 20°, more preferably 5° - 10°;
   - the monitoring surface comprises a first opening through which the ultrasound emitter is exposed and a second opening through which the ultrasound sensor is exposed; and
   - the ultrasound emitter and the ultrasound sensor are spaced apart in a direction parallel to the attachment surface.

4. The drain sensor assembly according to any of the previous claims, further comprising a battery module configured to power the drain sensor assembly and provide a battery level, wherein the battery module is communicatively coupled to the communication module and the communication module is further configured to communicate a battery level of the battery module to the monitoring device.

**5.** The drain sensor assembly according to any of the previous claims, wherein the communication module is further configured to at least one of:

- communicate an identifier of the drain sensor assembly or the drainage element in which the drain sensor is arranged to the monitoring device, preferably when communicating the filling level value and/or the battery level to the monitoring device; and
- collect monitoring commands for the drain sensor assembly from the monitoring device and communicate the monitoring commands to the processing module which in turn controls the ultrasound emitter, and preferably also the ultrasound sensor, based on the monitoring commands.

**6.** The drain sensor assembly according to any of the previous claims, wherein the processing module is configured to at least one of:

- determine a repetition rate of emitting of ultrasound signals by the ultrasound emitter based on at least one of:

- battery level of the battery module;
- monitoring commands of the monitoring device;
- one or more than one previously determined filling level value; and
- differences between previously determined filling level values;

- process the reflected ultrasound signal using a band-pass filter for frequencies of the ultrasound signal emitted by the ultrasound emitter;
- process the reflected ultrasound signal using an amplitude threshold filter; and
- correct for temperature effects on the speed of sound in determining the filling level value by using a temperature value received from a temperature sensor comprised by the drain sensor assembly and communicatively coupled to the processing module.

**7.** The drain sensor assembly according to any of the previous claims, further comprising an undulating exterior surface configured and to be arranged to allow amphibians to pass by the ultrasound emitter and the ultrasound sensor, and optionally out of the drainage element.

**8.** A drainage element, preferably a sewage or stormwater drainage element in particular a sewage or stormwater drainage well such as a stormwater drain or a gully pot, the drainage element comprising:

- a drainage housing defining an interior for collecting and discharging fluids such as stormwater, the drainage housing optionally having a discharge opening in a lower region of the drainage element, wherein the discharge opening is preferably offset from a bottom of the drainage housing; and
- a drain sensor assembly according to any of the previous claims arranged, preferably in an upper region of the drainage element, to monitor a filling level inside the interior of the drainage element, and

optionally, wherein the drainage housing has a bottom surface delimiting the interior in a downwards direction and the ultrasound emitter of the drain sensor assembly is arranged to emit the ultrasound signal towards the bottom surface, wherein the ultrasound sensor is preferably configured and arranged to sense a reflection of the ultrasound signal emitted towards the bottom surface.

**9.** The drainage element according to claim 8, wherein at least one of:

- the drainage housing further comprises one or more than one sidewall extending in an upright direction and the drain sensor assembly is arranged on or in at least one of the one or more than one sidewall, wherein the drain sensor assembly is preferably arranged at a corner defined by two sidewalls of the one or more than one sidewall;
- the drainage element further comprises a cover delimiting the interior in an upwards direction and the drain sensor assembly is arranged on or in the cover, wherein the cover preferably is an openable cover or a removable cover;
- at least one of the ultrasound emitter and the ultrasound sensor is arranged such that the ultrasound signal is emitted and sensed, respectively, in a respective emission or sensing direction at an angle relative to the vertical in the range of 0° - 45°, preferably 2° - 20°, more preferably 5° - 10°; and
- the drain sensor assembly comprises the undulating exterior surface configured and arranged to allow amphibians to pass by the ultrasound emitter and the ultrasound sensor of the drain sensor assembly and out of the drainage element.

**10.** A monitoring system for remote monitoring of filling levels of drainage elements in a drainage network, the monitoring system comprising:

- at least one drain sensor assembly or drainage element according to any of the previous claims;

and

- a monitoring device communicatively coupled or couplable with the communication module of each of the at least one drain sensor assembly or drainage element and configured to receive filling level values therefrom, and

optionally, wherein the communication module is configured to initiate communication with the monitoring device and the monitoring device is configured to await initiation of communication by the communication module.

11. The monitoring system according to claim 10, wherein the monitoring device is configured to provide monitoring commands for collection by the communication module and preferably register whether the monitoring commands are collected, wherein the monitoring commands include a preset monitoring repetition rate which is modifiable by the drain sensor assembly based in at least one of:

- a battery level of a battery module comprised by the drain sensor assembly;
- one or more than one previously determined filling level value of the drain element; and
- differences between previously determined filling level values of the drain element.

12. The monitoring system according to claim 10 or 11, wherein the monitoring device is configured to output maintenance data based on communication received from the communication modules, wherein the maintenance data optionally includes at least one of:

- a cleaning instruction for specific drainage elements of the drainage network for which the filling level value exceeds a predetermined maximum filling level, preferably over a predetermined period of time;
- a review instruction for specific drainage elements of the drainage network for which the filling level value is below a predetermined minimum filling level, preferably over a predetermined period of time;
- a battery change instruction for specific drain sensor assemblies of the monitoring system for which a battery level is below a predetermined minimum battery level; and
- an inspection instruction for specific drain sensor assemblies of the monitoring system from which no communication has been initiated over a predetermined period of time.

13. A method for remote monitoring of a filling level of a drainage element, wherein preferably a drain sensor assembly, drainage element or monitoring system according to any of the previous claims is employed, the method comprising:

- emitting an ultrasound signal downwards into an interior of the drainage element;
- sensing a reflected ultrasound signal due to reflection of the ultrasound signal inside the interior of the drainage element;
- determining a filling level value indicative of the filling level of the drainage element based on a time interval between emitting the ultrasound signal and sensing the reflected ultrasound signal; and
- communicating the filing level value to a monitoring device remote from the drainage element.

14. The method according to claim 13, wherein emitting the ultrasound signal comprises at least one of:

- emitting an ultrasound pulse of 3 - 100 oscillations upon receipt of an emission trigger; and
- emitting in an emission direction at an angle relative to vertical in the range of 0° - 45°, preferably 2° - 20°, more preferably 5° - 10°, and / or wherein sensing the reflected ultrasound signal comprises at least one of:
- time-gating to only sense ultrasound signals during a predetermined period after emitting the ultrasound signal;
- sensing with a field of view which at least partially overlaps a field of view used in emitting the ultrasound signal; and
- sensing in a sensing direction at an angle relative to vertical in the range of 0° - 45, preferably 2° - 20°, more preferably 5° - 10°.

15. The method according to claim 13 or 14, comprising at least one of:

- powering the method with a battery and communicating a battery level of the battery to the monitoring device, preferably as part of communicating the filing level value;
- communicating an identifier of the drainage element the monitoring device, preferably when communicating the filling level value and/or the battery level to the monitoring device;
- collecting monitoring commands from the monitoring unit and controlling emitting the ultrasound signal, preferably also sensing the reflected ultrasound signal, based on the monitoring commands;
- determining a repetition rate of emitting of ultrasound signals based on at least one of:

  - battery level of the battery;
  - monitoring commands of the monitoring module;
- one or more than one previously determined filling level value; and
- differences between previously determined filling level values, and / or

wherein determining the filling level value comprises at least one of:

- processing the reflected ultrasound signal using a band-pass filter for frequencies of the emitted ultrasound signal;
- processing the reflected ultrasound signal using an amplitude threshold filter on the reflected ultrasound signal; and
- correcting for temperature effects on the speed of sound using a temperature value obtained from the interior of the drainage element.

FIG. 1

FIG. 2

FIG. 3

FIG. 4

FIG. 5

FIG. 6

FIG. 7

FIG. 8

EP 4 553 245 A1

FIG. 9

**FIG. 10**

EP 4 553 245 A1

Europäisches
Patentamt

European
Patent Office

Office européen
des brevets

# EUROPEAN SEARCH REPORT

**Application Number**

EP 24 21 2112

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/044547 A1 (WOODS STEPHEN [GB]) 9 February 2023 (2023-02-09) | 1-3,6, 11-15 | INV. E03F5/04 |
| A | * paragraphs [0047], [0064] - [0069]; figures 1,3,5A-5D * | 4,5,7-10 | E03F7/00 E03F5/046 G01F23/28 |
| X | US 8 924 167 B2 (DECKER THOMAS R [US]) 30 December 2014 (2014-12-30) | 1,3,5,8, 11-15 | G01F23/2962 |
| A | * claim 1; figure 1 * | 2,4,6,7, 9,10 | |
| X | US 10 801 663 B2 (SOUTH EAST WATER CORP [AU]) 13 October 2020 (2020-10-13) * figures 1,2 * | 1,3,5, 8-15 | |
| X | US 2007/103324 A1 (KOSUGE ROY [US] ET AL) 10 May 2007 (2007-05-10) * paragraphs [0003], [0015], [0016], [0042], [0043] * | 1,3,4,8, 9,11-15 | |
| X | CA 2 598 215 A1 (ENGINEERING TECHNOLOGIES CANAD [CA]) 21 February 2008 (2008-02-21) * paragraphs [0012], [0013], [0033] - [0035] * | 1,2,13 | **TECHNICAL FIELDS SEARCHED (IPC)** E03F E03B |
| A | US 8 495 913 B2 (PARTINGTON THOMAS JOHN [GB]; FEATONBY PAUL DAVID [GB] ET AL.) 30 July 2013 (2013-07-30) * See for "to provide time-gated detection". * | 1,2,13 | G01F E03C |

The present search report has been drawn up for all claims

| Place of search | Date of completion of the search | Examiner |
|---|---|---|
| Munich | 4 February 2025 | Flygare, Esa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 2112

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2025

| Patent document cited in search report | | | Publication date | Patent family member(s) | | | Publication date |
|---|---|---|---|---|---|---|---|
| US 2023044547 | A1 | | 09-02-2023 | AU | 2021211183 | A1 | 15-09-2022 |
| | | | | CA | 3163309 | A1 | 29-07-2021 |
| | | | | EP | 4094053 | A1 | 30-11-2022 |
| | | | | GB | 2591274 | A | 28-07-2021 |
| | | | | US | 2023044547 | A1 | 09-02-2023 |
| | | | | WO | 2021148778 | A1 | 29-07-2021 |
| | | | | ZA | 202207054 | B | 18-12-2024 |
| US 8924167 | B2 | | 30-12-2014 | NONE | | | |
| US 10801663 | B2 | | 13-10-2020 | AU | 2017294793 | A1 | 24-01-2019 |
| | | | | CA | 3030528 | A1 | 18-01-2018 |
| | | | | EP | 3485235 | A1 | 22-05-2019 |
| | | | | NZ | 749848 | A | 29-04-2022 |
| | | | | SG | 11201811456P | A | 30-01-2019 |
| | | | | US | 2019154196 | A1 | 23-05-2019 |
| | | | | WO | 2018009976 | A1 | 18-01-2018 |
| US 2007103324 | A1 | | 10-05-2007 | US | 2007103324 | A1 | 10-05-2007 |
| | | | | US | 2008155064 | A1 | 26-06-2008 |
| CA 2598215 | A1 | | 21-02-2008 | NONE | | | |
| US 8495913 | B2 | | 30-07-2013 | CN | 101855525 | A | 06-10-2010 |
| | | | | EP | 2217891 | A2 | 18-08-2010 |
| | | | | ES | 2727939 | T3 | 21-10-2019 |
| | | | | US | 2010257931 | A1 | 14-10-2010 |
| | | | | WO | 2009063194 | A2 | 22-05-2009 |

For more details about this annex : see Official Journal of the European Patent Office, No. 12/82